# EUROPEAN PATENT SPECIFICATION

(11) **EP 4 287 465 B1**
(45) Date of publication and mention of the grant of the patent: **09.09.2026**
(21) Application number: 23205346.2
(22) Date of filing: 19.05.2021
(51) Int. Cl.: H02K 3/26

(54) **HIGH-PERFORMANCE COIL FOR ELECTRICAL MACHINE AND COIL ASSEMBLY FOR A LINEAR MOTOR**
HOCHLEISTUNGSSPULE FÜR EINE ELEKTRISCHE MASCHINE UND SPULENANORDNUNG FÜR EINEN LINEARMOTOR
BOBINE HAUTE PERFORMANCE POUR MACHINE ÉLECTRIQUE ET ENSEMBLE DE BOBINE POUR MOTEUR LINÉAIRE

(43) Date of publication of application: 06.12.2023
(62) Document number(s) of the earlier application(s) in accordance with Art. 76 EPC: 21174718.3 / 4 092 878
(73) Proprietor: ETEL S.A., 2112 Môtiers (CH)
(72) Inventor: Thabuis, Adrien, 2000 Neuchâtel (CH); Fasolo, Alessandro, 2000 Neuchâtel (CH); Veronesi, Daniele, 2035 Corcelles (CH); Xiaotao, Ren, 2000 Neuchâtel (CH); Perriard, Yves, 2000 Neuchâtel (CH)
(74) Representative: P&TS SA (AG, Ltd.)

(56) References cited:
- CH-A2- 715 403
- US-A1- 2013 249 344
- US-A1- 2014 339 949
- US-A1- 2019 245 401
- US-B1- 6 262 503
- US-B1- 6 355 993

## Description

### Field of the invention

The present invention relates to a high-performance coil, for an electrical machine, with improved copper filling factor. The present invention also relates to a coil assembly made of multiple high-performance coils and to an electrical machine, in particular a linear motor, comprising a mobile part integrating the coil assembly.

### Background of the invention

In electrical machines, such as electric motors, overlapped windings are used to improve the magnetic performances of the machines. In ironless electric motors, this comes with the possibility to increase the active conductor quantity in order to improve the motor performance.

In order to create an overlapped winding however, it is necessary that the conductor (usually round wire) changes plane in the coil in such a way to create the overlapping between adjacent wires of the coils. Usually, the change of plane is performed at the end-winding regions located on two opposite sides of the active region of the coil, implying a waste of material, since the conductor used in the transition is inactive as it does not contribute to the creation of force. In addition, solutions with variable wire section result in coil shapes with sharp end winding edges which are not optimal to limit the waste of material and the leak of magnetic flux. This limits the possibility to minimize the electrical resistance of the winding and the performances of the coil, in particular the ratio between the electric energy that is converted to mechanical power and the electric energy that is converted to heat, cannot therefore be increased further.

Several designs of overlapping coils exist that aim to maximize the active conductor quantity and the performance of the electrical machine. In all of them, the transition of the conductor between different planes is smooth, requiring complex shapes for the end-winding. Waste of material is therefore inevitable in these inactive regions. Even solutions with variable wire section result in sharp end winding edges which are not optimal to limit the waste of material and the leak of magnetic flux.

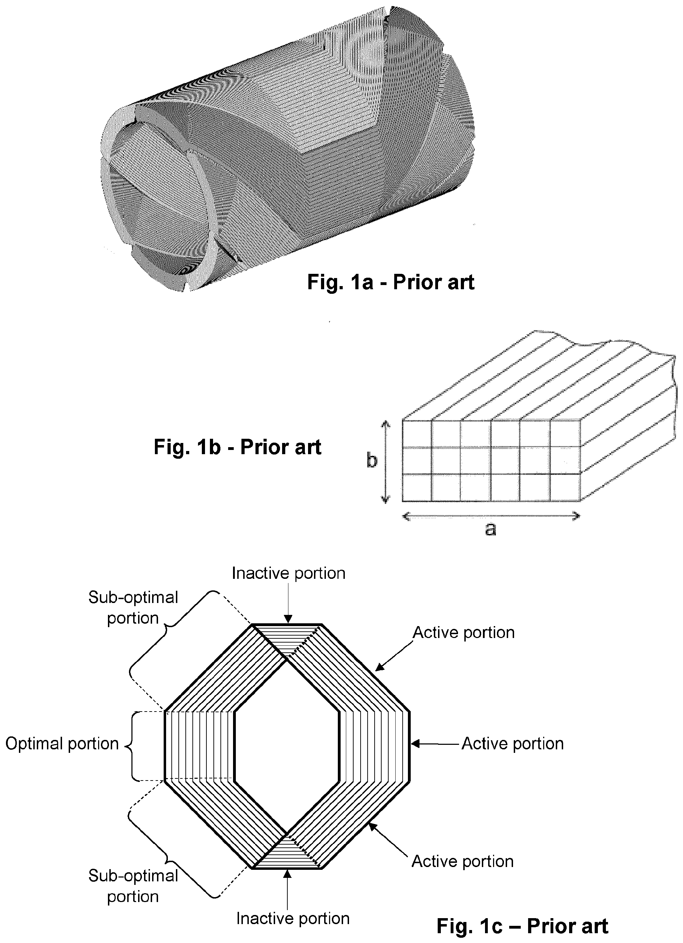

CH715403 for example discloses a rotary electric machine comprising a rotor and a stator separated by an air gap. The stator comprises a winding with a plurality of coils. Each coil as shown in Figure 1a has a cross section illustrated in Figure 1b having a plurality of wires. This cross-section has a thickness b measured radially from the inner side of the coil to the outer side of the coil, and a width a measured substantially perpendicular to the length of the wires and substantially parallel to the outer side of the coil, wherein the thickness b and the width a are variable along the coil. This winding increases the performance and more particularly the motor constant linking the generated torque to the copper losses.

According to CH715403, the transition between different active planes of the coil is done by a "transition step", consisting in two sharp corners of the conductor in the main body of the coil, with the consequent advantage of minimizing the end winding passive region, which is not providing benefit to the performance of the machine.

The coil shape shown in Figure 1c is the one disclosed in CH715403, which has been "flattened" to be suitable for a linear motor instead of a rotary motor. One can observe that the conductor thickness varies around the coil. In particular, the cross-section area of adjacent wires in the inactive portions of the coil is about half the cross-section area of adjacent wires in the optimal portions of the active portion of coil. Moreover, the cross-section area of adjacent wires in suboptimal portions of the active portion of coil is about 70% of the cross-section area of adjacent wires in the optimal portions of the active portion of coil. The inactive portions are basically triangular in such a way that several coils can be chained to form a motor winding with several phases (typically 3). The cross-section area of the wires in the inactive portions of the coil and the suboptimal cross-section area in suboptimal portions of the coil lead to high losses and reduce the motor performance.

US2014339949 discloses a preformed coil to produce a self-supporting air-gap skewed winding of a small electric motor consisting of at least two preformed coils overlapping on a circumference of a winding.

US2013249344 discloses a hollow-cylindrical coreless winding for an electric motor, comprising a plurality of single coils overlapping in a roof tile manner.

US6355993 discloses a linear motor having a polygonal shaped motor coil.

US2019245401 discloses a motor coil including a flexible insulating substrate having a cylindrical shape, and coils formed in spiral shapes.

US6262503 discloses a motor coil with heat sinks.

### Brief summary of the invention

An aim of the present invention is therefore to provide a high-performance coil for electrical machine which overcomes the limitations of the prior art.

In particular, an aim of the present invention is to provide a high-performance coil that is shaped to maximize the ratio between the electric energy that is converted to mechanical power and the electric energy that is converted to heat.

Another aim of the present invention is to provide a coil assembly with an improved copper filling factor.

A further aim of the present invention is to provide a coil assembly with improved heat dissipation.

These aims are achieved notably by a coil for an electrical machine, comprising an active portion having at least a first and a second curved branch forming a central opening therebetween and at least a first and a second terminal rounded portion forming an integral part with the respective ends of said first and second curved branches. The radius of curvature of the outer lateral edge of respective first and second curved branches is larger than the radius of curvature of the outer edge of respective first and second terminal rounded portion. Each of the first and a second terminal rounded portions comprises a transition portion such that the bottom surface of respective first and second curved branches lies respectively within a first and second plane parallel to each other. The ratio between the section area of any adjacent conductive path at the respective ends of the first and second curved branches and the section area of the corresponding conductive path at the level of a middle zone of the active portion, is above 80% and preferably above 90%. The section area of any adjacent conductive path at the level of a middle zone of the active portion corresponds to the section area of the corresponding conductive path at the level of respective first and a second terminal rounded portion.

In an embodiment, the active portion comprises not more and not less than two curved branches forming an integral part with the first and second terminal rounded portion. Adjacent curved conductive paths interspersed between insulation strips run continuously along the two curved branches and the first and second terminal rounded portions.

In an embodiment, the transition portion forms a step whose height corresponds to the thickness of each of the first and second curved branches such that the bottom surface of the second curved branch and the top surface of the first curved branch lie substantially within the same plane.

In an embodiment, the adjacent conductive paths and the insulation strips therebetween of respective conductive portion and first and second terminal rounded portion form together a laminated coil. The laminations are perpendicular to said first and second planes.

In an embodiment, the coil further comprises one or two heat sinks extending from an end portion of one terminal rounded portion or from an end portion of the first and second terminal rounded portions.

Another aspect of the invention relates to a coil assembly comprising N coils, N being a multiple of 3. The second curved branch of one coil rests on the first curved branch of two adjacent coils such that the cross-sections of respective curved branches of the corresponding coils taken along a middle zone of the active portion form a staggered pattern.

In an embodiment, the coil assembly comprises a single row of heat sinks extending along one longitudinal side of the coil assembly.

In an embodiment, the coil assembly comprises two rows of heat sinks extending along two opposite longitudinal sides of the coil assembly.

Another aspect of the invention relates to a coil for an electrical machine, comprising an active portion having a first and a second curved branch forming a central opening therebetween and at least a first and a second terminal rounded portion forming an integral part with the respective ends of said first and second curved branches. Each of the first and second terminal rounded portions comprises a step whose height corresponds to the thickness of each of the first and second curved branches such that a bottom surface of the second curved branch and a top surface of the first curved branch lie substantially within the same plane.

Another aspect of the invention relates to an electrical machine comprising a plurality of coils as described in any of paragraphs [0012] to [0017].

In an embodiment, the electrical machine is a linear motor comprising a stationary part having permanent magnets and a moving part comprising the coil assembly as described in any of paragraphs [0018] to [0020].

In an embodiment, the moving part comprises a longitudinal recess filled with cooling water. Heat sink extending along a longitudinal side of the coil assembly is at least partly positioned into the recess to be able to dissipate heat in the cooling fluid.

In an embodiment, the electrical machine is a rotary motor comprising a stator having a plurality of coils as described in any of paragraphs [0012] to [0017].

### Brief description of the drawings

The invention will be better understood with the aid of the description of several embodiments given by way of examples and illustrated by the figures, in which:
- Figure 1a shows a perspective view of a 6-coil, three-phase slotless winding made with six coils of non-constant width and thickness along a cross section according to the prior art;
- Figure 1b shows a perspective view of a portion of a coil of Figure 1a with a cross-section of a coil branch;
- Figure 1c shows the coil shape of a coil of Figure 1a, which has been "flattened" to be suitable for a linear motor instead of rotary motor;
- Figure 2 shows a schematic top view of a coil comprising two curved branches and two terminal rounded portions forming an integral part with the two branches according to an embodiment of the invention;
- Figure 3 shows a perspective view of the coil of Figure 2;
- Figure 4 shows a top view of Figure 3;
- Figure 5 shows a perspective partial view of a coil integrating a heat sink according to another embodiment;
- Figure 6 shows a coil assembly for the mobile part of a linear motor according to another aspect of the invention;
- Figure 7 shows a partial perspective view of three coils of the coil assembly of Figure 6 with a cross-section of the first and second branches of each coil;
- Figure 8 shows a perspective view of a coil comprising multiple superposed layers having each a first and second curved branches according to another embodiment which is not part of the invention;
- Figure 9 shows a perspective view of a coil assembly for the mobile part of a linear motor comprising several coils of Figure 8 intertwined according to another embodiment which is not part of the invention;
- Figure 10 shows a partial perspective view of three coils of the coil assembly of Figure 9 with a cross-section of each coil showing superposed layers made of a first and a second branch;
- Figure 11 shows a top perspective view of Figure 10;
- Figure 12 shows a perspective view of a coil similar to the coil of Figure 8 integrating two heat sinks extending from respective first and second terminal rounded portion according to another embodiment, which is not part of the invention;
- Figure 13 shows a perspective view of a coil assembly for the mobile part of a linear motor comprising several coils of Figure 12 intertwined according to another embodiment which is not part of the invention; and
- Figure 14 shows a schematic cross-section view of a terminal portion of the coil according to the embodiment of Figures 8 and 12.

### Detailed description of several embodiments of the invention

Coil assemblies, according to different embodiments described subsequently, are made of several identical coils designed to optimize the copper filling factor of the coil assembly as well as to minimize power loss. The coil assembly is configured to be integrated into a moving part slidably mounted on a stationary part of a linear motor as described for example WO2004/017500 or US2006/0175907.

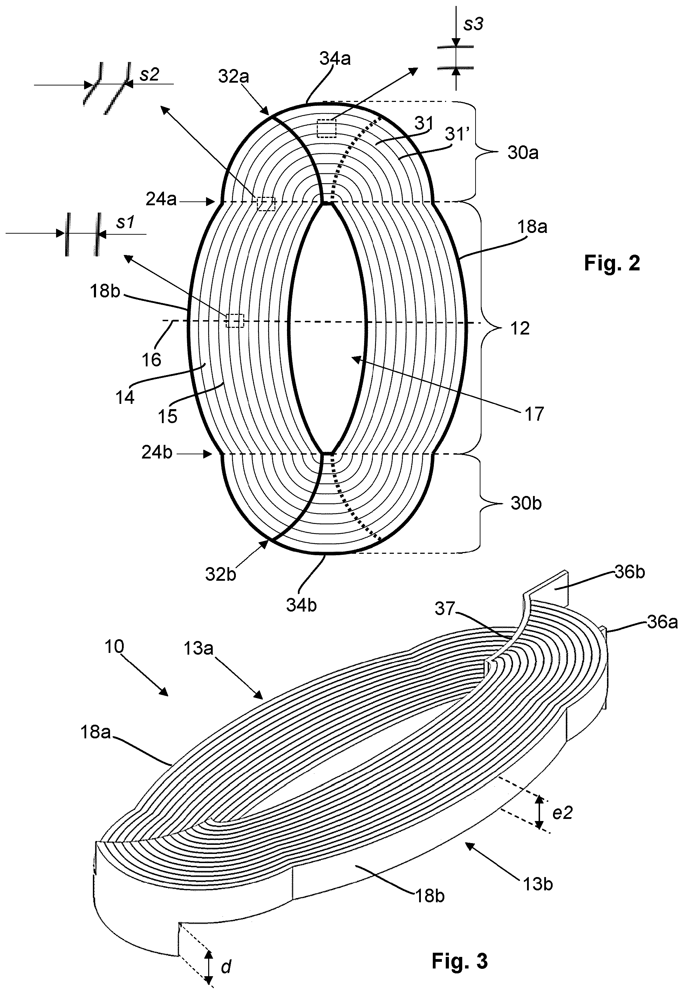

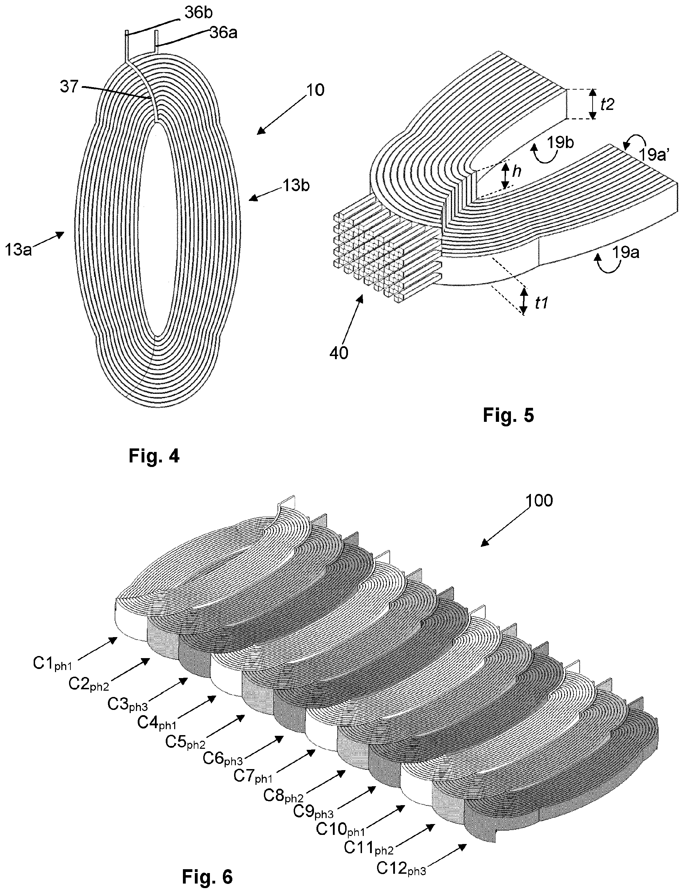

According to an embodiment of the invention, shown in Figures 2 to 5, the coil 10 comprises an active portion 12 and a first and a second terminal rounded portion 30a, 30b. The active portion 12 comprises a first and a second curved branch 13a, 13b whose respective radii of curvature are inverted to form therebetween a quasi-elliptical central opening 18. The first and second branches 13a, 13b are made of adjacent conducting curved paths 14 and insulation strips 15 therebetween. The first and second terminal rounded portions 30a, 30b are made of adjacent conductive rounded paths 31 and insulation strips 31' therebetween and form with the active portion 12 of the coil 10 an integral part such that the conductive paths are continuous from a coil input 36a to a coil output 36b as shown for example in Figure 4. The coil input and output can of course be swapped depending on the configuration of coil in the linear motor.

Each of the first and second terminal rounded portion 30a, 30b comprises a transition portion 32a, 32b which are in the form of a step shaped such that the conductive paths 31 are deflected by 90°. With reference to Figure 5, the height h of the step corresponds substantially to the thickness *t1*, *t2* of each of the first and second curved branches 13a, 13b. The bottom surface 19b of the second curved branch 13b and the top surface 19a' of the first curved branch 13a lie substantially within the same plane.

Referring to Figure 2, the adjacent conductive paths 14 have a cross-section that remains quasi-constant from a middle zone 16 of the active portion 12 to a transition zone 24a, 24b between the active portion 12 to respective first and second terminal rounded portion 30a, 30b as opposed to Figure 1c of the prior art where the cross-section area of the adjacent conductive paths is reduced by approximately 30% in the sub-optimal portions and 50% in the inactive portions.

More particularly, the ratio between the section area s2 of any adjacent conductive path 14 at the respective ends of the first and second curved branches 13a, 13b and the section area s1 of the corresponding conductive path 14 at the level of a middle zone 16 of the active portion 12 of the coil, is at least above 80% and preferably above 90%.

In addition, the section area s1 of any adjacent conductive path 14 at the level of a middle zone 16 of the active portion 12 of the coil corresponds to the section area s3 of the corresponding conductive path 31 at the level of respective first and a second terminal rounded portion 30a, 30b which is substantially constant over 180°, i.e. over the whole terminal portion.

The specific shape of the coil increases the magnetic force generated by the active portion 12 when a voltage is applied between the coil input and output 36a, 36b while reducing resistance in the first and second terminal portions thereby reducing heat generation and power loss.

The coil 10 may advantageously be produced by additive manufacturing which has the benefit of maximizing the copper fill factor thanks to geometrically perfectly adapted coil. The insulation strips are preferably made of ceramic. Micro porous ceramic provides a greater contact surface area and has therefore excellent heat dissipation and heat conducting properties. The ceramic may preferably be printed simultaneously with the copper.

Adjacent conductive paths 14, 31 made of copper and the ceramic strips 15, 31' therebetween of respective active portion 12 and first and second terminal rounded portion 30a, 30b form together an integral laminated coil with the laminations arranged perpendicularly to the plane of the coil 10 as readily apparent in Figure 5.

The coil according to this embodiment may be easily dimensioned according to the performance sought and additional laminations can be added to increase the magnetic force generated by the coil with minimal impact on the overall size of the coil. The ratio between the performance of the coil and its footprint is therefore optimal.

The shape and the space relationship between the first and second curved branches 13a, 13b of the active portion 12 of the coil 10 make it possible to create a coil assembly with a high ratio between the performance of the coil assembly and its footprint. More particularly, the three-phases coil assembly 100 illustrated in Figure 6, according to an embodiment, comprises twelves coils C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃. The second curved branch 13b of each coil is positioned on top of the first branch 13a (Figure 3) of an adjacent coil. The top surface of the second curved branch 13a of each coil lies within a first plane while the bottom surface of the first curved branch 13a of each coil lies within a second plane parallel to the first plane.

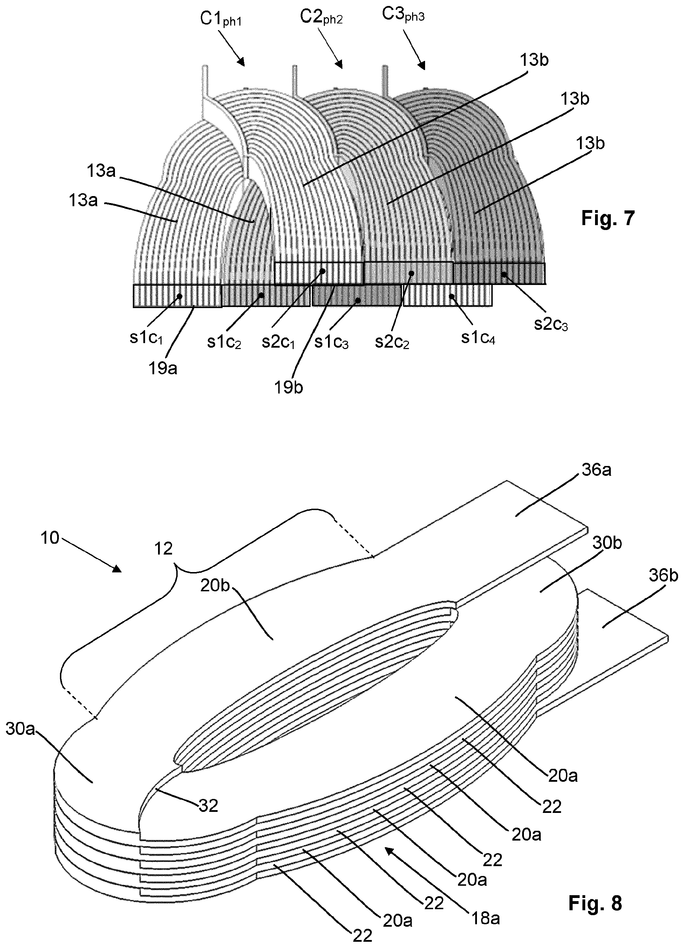

As shown in Figure 7, the first and second curved branch 13a of each adjacent coil C1ₚₕ₁, C2ₚₕ₂, C3ₚₕ₃ are juxtaposed while the cross-sections s1C₂, s2C₁, s1C₃, s2C₂, s1C₄, s2C₃ of respective first and second curved branches 13a, 13b of the corresponding coils C1ₚₕ₁, C2ₚₕ₂, C3ₚₕ₃ taken along the middle zone 16 of the active portion 12 (Figure 2) of each coil form a staggered pattern.

According to another embodiment, which is not part of the invention and illustrated in Figure 8, the coil 10 comprises an active portion 12 made of multiple superposed layers having each a first and second curved branches 20a, 20b forming an integral conductive part with respectively a first and a second terminal portion 30a, 30b. The active portion 12 of the coil comprises empty spaces 22 between respective first and second curved branches 20a, 20b of each layer. The empty spaces 22 extend from the outer lateral edge 18a, 18b of respective superposed first and second curved branches 20a, 20b into the quasi-elliptical central opening 17 of the coil 10.

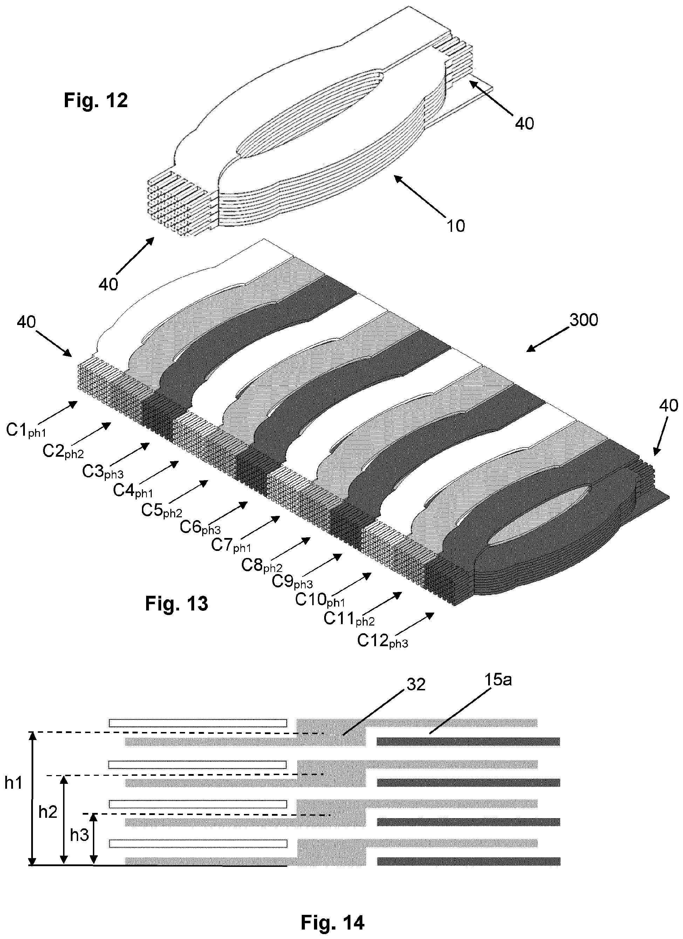

With reference to the embodiment of Figure 14 which is not part of the invention, the first and second terminal rounded portions 30a, 30b of each layer comprises a transition portion 32 configured to ensure that the first and second curved branches 20a, 20b of the corresponding layer do not lie within the same plane. The median heights h1, h2, h3 of the transition portions 32 of the respective superposed first terminal rounded portions 30a with respect to the bottom surface of the coil are shifted relative to the height of the transition portions of the respective superposed second terminal rounded portions 30b to form an elliptical spiral path around an axis perpendicular to the plane of the coil from the coil input 36a to the coil output 36b as shown in Figure 8. The elliptical spiral configuration of the coil increases the surface of the coil for improved heat dissipation. In another non-illustrated embodiment, the coil is made of multiple superposed layers, wherein each layer has a similar shape of the coil of Figure 3 but with a reduced height.

The coil 10 is produced by a two-steps manufacturing process. The coil of Figure 8 is first integrally formed by additive manufacturing to obtain an integral part of a conductive material, preferably in copper. The coil is then immersed into a bath to build up a ceramic coating 15a for insulation of the coil as schematically shown in Figure 14. A laminated coil is obtained with the laminations extending parallel to the plane of the coil.

With reference to Figure 5, the coil of Figure 3 may comprise one or two heat sink 40 extending from one or both first and second terminal rounded portion of the coil 10 so as to dissipate heat according to another embodiment. Likewise, with reference to Figure 12, the coil of Figure 8 may comprise one or two heat sinks 40 extending from one or both first and second terminal rounded portion according to another embodiment.

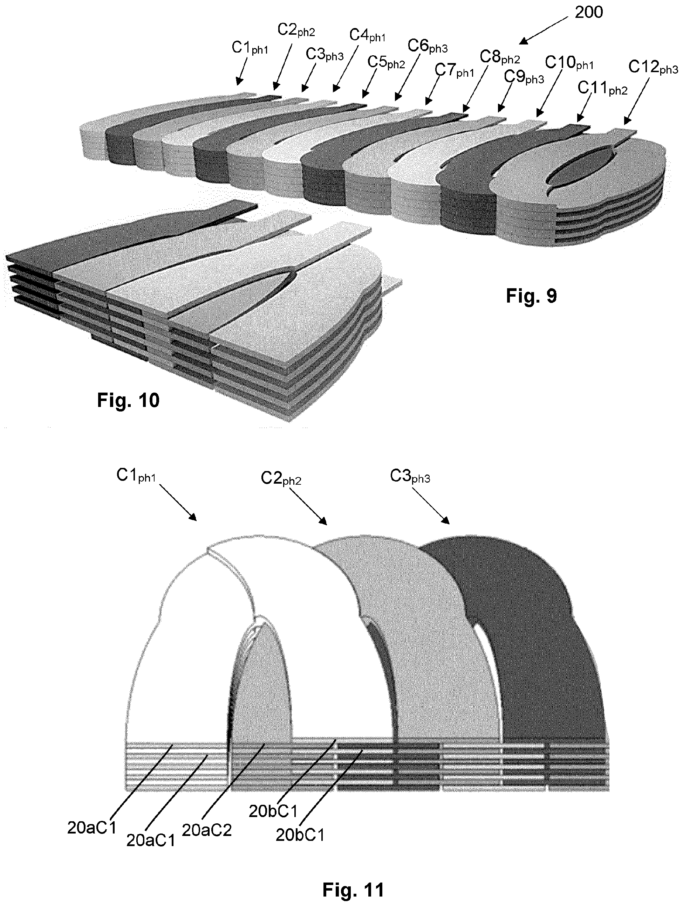

The coil of Figure 8, which is not part of the invention, is adapted to form a three-phase coil assembly 200 according to Figures 9 to 11 with an optimized copper filing factor. The coil assembly may for example comprise twelve coils C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃. Adjacent coils of each phase C1ₚₕ₁, C2ₚₕ₂, C3ₚₕ₃ are intertwined. As particularly shown in Figure 11, a part of the first curved branch 20a of each layer of two adjacent coils C2ₚₕ₂, C3ₚₕ₃ filled the corresponding empty spaces 22 (Figure 8) of the second curved branches 20a of a third coil C1ₚₕ₁ which is adjacent to one of the two adjacent coils. Intertwined coils according to this embodiment advantageously increase the surface for heat transfer between the different phases of the coil assembly 200.

The empty spaces 22, formed by the superposition of the layers located at both ends of the coil assembly which are not intertwined, may be filled with copper to decrease the resistance of the coil assembly, thereby improving the performance of the coil assembly.

Figure 13 shows another embodiment, which is not part of the invention, of a coil assembly 300, similar to the coil assembly 200 of Figure 9, comprising twelve coils C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃. Each of these coils comprises two heat sink 40 extending from an end portion of its first and second terminal rounded portions to form two rows of heat sinks extending along two opposite longitudinal sides of the coil assembly.

The coil assembly 100, 200, 300 as described above is configured to be integrated into a moving part slidably mounted on a stationary part of a linear motor. In an advantageous non-illustrated embodiment, the coil assembly 300 or the coil assembly 100 comprising a heat sink (non-illustrated) extending along at least one of its two opposite longitudinal sides is integrated in the moving part of a linear motor. The moving part comprises a longitudinal recess filled with cooling fluid. The heat sink extending along one longitudinal side of the coil assembly is at least partly positioned into the recess to be able to dissipate heat in the cooling fluid to optimize the cooling of the coil assembly.

### Reference list

Coil 10
   Active portion 12
      First and second curved branches 13a, 13b
         Adjacent curved conducting paths 14
         Insulation strips 15
         Insulation coating 15a (2^{nd} embodiment)
         Middle zone 16
            Conductive path section s1
         Ends section s2
         Central opening 17
         Outer lateral edges 18a, 18b
         Bottom surface (of the first branch) 19a
         Top surface (of the first branch) 19a'
         Bottom surface (of the second branch) 19b
         Distance between the first and second bottom surfaces d
         Thickness of the first and second branches *t1, t2*
         Superposed integral conductive parts 20a, 20b (2^{nd} embodiment)
            Empty spaces 22
   Transition zones 24a, 24b
      Terminal rounded portion 30a, 30b
      Adjacent curved conducting paths 31
      Insulation strips 31'
      transition portion 32a, 32b
         Step height *h*
      Outer edges 34a, 34b
      Coil input and output 36a, 36b
         Curved wall 37
      Conductive interconnection portions 38 (2^{nd} embodiment)
      Heat sink 40
Coil assembly 100, 200, 300
   C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃

## Claims

1. A laminated coil (10) for an electrical machine, with the laminations arranged perpendicularly to the plane of the coil, comprising an active portion (12) having at least a first and a second curved branch (13a, 13b; 20a, 20b) forming a quasi-elliptical central opening (18) therebetween and at least a first and a second terminal rounded portion (30a, 30b) forming an integral part with the respective ends of said first and second curved branches (13a, 13b; 20a, 20b), wherein the radius of curvature of the outer lateral edge (18a, 18b) of respective first and second curved branches (13a, 13b; 20a, 20b) is larger than the radius of curvature of the outer edge (34a, 34b) of respective first and second terminal rounded portion (30a, 30b), and wherein each of said first and second terminal rounded portions (30a, 30b) comprises a transition portion (32a, 32b; 32) such that the bottom surface (19a, 19b) of respective first and second curved branches (13a, 13b; 20a, 20b) lies respectively within a first and second plane parallel to each other, **characterized in that** the ratio between the section area (s2) of any adjacent conductive path (14) at the respective ends of the first and second curved branches (13a, 13b) and the section area (s1) of the corresponding conductive path (14) at the level of a middle zone (16) of the active portion (12), is above 80% and preferably above 90%, wherein the section area (s1) of any adjacent conductive path (14) at the level of a middle zone (16) of the active portion (12) corresponds to the section area (s3) of the corresponding conductive path (31) at the level of respective first and a second terminal rounded portion (30a, 30b).

2. The laminated coil (10) according to claim 1, wherein the active portion (12) comprises not more and not less than two curved branches (13a, 13b) forming an integral part with said first and second terminal rounded portions (14a, 14b), and wherein adjacent curved conductive paths (14) interspersed between insulation strips (15) run continuously along said two curved branches (13a, 13b) and said first and second terminal rounded portions (30a, 30b).

3. The laminated coil (10) according to any preceding claim, wherein said transition portion (32a, 34b) forms a step whose height (h) corresponds to the thickness (*t1*, *t2*) of each of the first and second curved branches (13a, 13b) such that the bottom surface (19b) of the second curved branch (13b) and the top surface (19a') of the first curved branch (13a) lie substantially within the same plane.

4. The laminated coil (10) according to any preceding claim, wherein the adjacent conductive paths (14, 31) and the insulation strips (15, 31') therebetween of respective conductive portion (12) and first and second terminal rounded portion (30a, 30b) form together a laminated coil, wherein the laminations are perpendicular to said first and second planes.

5. The laminated coil according to any preceding claim, further comprising one or two heat sinks (40) extending from an end portion of one terminal rounded portion or from an end portion of said first and second terminal rounded portions (30a, 30b).

6. Coil assembly (100) comprises N coils (C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃) according to any preceding claim, N being a multiple of 3, wherein the second curved branch (13b) of one coil (C1ₚₕ₁) rests on the first curved branch (13a) of two adjacent coils (C2ₚₕ₂, C3ₚₕ₃) such that the cross-sections (s1C₂, s2C₁, s1C₃, s2C₂, s1C₄, s2C₃) of respective first and second curved branches (13a, 13b) of the corresponding coils taken along a middle zone (16) of the active portion (12) of each coil form a staggered pattern.

7. The coil assembly (100) according to the preceding claim, comprising a single row of heat sinks (40) extending along one longitudinal side of the coil assembly.

8. The coil assembly (100) according to claim 6 or 7, comprising two rows of heat sinks (40) extending along two opposite longitudinal sides of the coil assembly.

9. Linear motor comprising a stationary part having permanent magnet and a moving part comprising the coil assembly (100, 200) according to any of claims 6 to 8.

## Patentansprüche

1. Laminierte Spule (10) für eine elektrische Maschine, mit senkrecht zur Ebene der Spule angeordneten Laminierungen, umfassend einen aktiven Teil (12), welcher mindestens einen ersten und einen zweiten gekrümmten Schenkel (13a, 13b; 20a, 20b) aufweist, die zwischen sich eine quasi-elliptische zentrale Öffnung (18) bilden, und mindestens einen ersten und einen zweiten abgerundeten Endteil (30a, 30b), die einstückig mit den jeweiligen Enden der besagter erster und zweiter gekrümmter Schenkel (13a, 13b; 20a, 20b) ausgebildet sind, worin der Krümmungsradius des Aussenseitenrandes (18a, 18b) der jeweiligen ersten und zweiten gekrümmten Schenkel (13a, 13b; 20a, 20b) grösser ist als der Krümmungsradius des Aussenrandes (34a, 34b) der jeweiligen ersten und zweiten abgerundeten Endteile (30a, 30b), und worin jeder besagter erster und zweiter abgerundeter Endteil (30a, 30b) einen Übergangsteil (32a, 32b; 32) umfasst, sodass sich die Unterseite (19a, 19b) der jeweiligen ersten und zweiten gekrümmten Schenkel (13a, 13b; 20a, 20b) jeweils innerhalb einer ersten und einer zweiten Ebene befinden, die parallel zueinander liegen, **dadurch gekennzeichnet, dass** das Verhältnis zwischen dem Querschnitt (s2) eines beliebigen, an die jeweiligen Enden der ersten und zweiten gekrümmten Schenkel (13a, 13b) angrenzenden Leiterpfads (14) und dem Querschnitt (s1) des entsprechenden Leiterpfads (14) im Bereich einer mittleren Zone (16) des aktiven Teils (12) grösser als 80 % und vorzugsweise grösser als 90 % ist, worin der Querschnitt (s1) eines beliebigen, angrenzenden Leiterpfads (14) im Bereich einer mittleren Zone (16) des aktiven Teils (12) dem Querschnitt (s3) des entsprechenden Leiterpfads (31) im Bereich des jeweiligen ersten und zweiten abgerundeten Endteils (30a, 30b) entspricht.

2. Laminierte Spule (10) gemäss Anspruch 1, worin der aktive Teil (12) weder mehr noch weniger als zwei gekrümmte Schenkel (13a, 13b) umfasst, welche einstückig mit den besagten ersten und zweiten abgerundeten Endteilen (30a, 30b) ausgebildet sind, und worin sich angrenzende gekrümmte Leiterpfade (14), die zwischen Isolierstreifen (15) eingefügt sind, kontinuierlich entlang der besagten zwei gekrümmten Schenkel (13a, 13b) und der besagten ersten und zweiten abgerundeten Endteilen (30a, 30b) erstrecken.

3. Laminierte Spule (10) gemäss irgendeinem der vorhergehenden Ansprüche, worin der besagte Übergangsteil (32a, 32b) einen Absatz bildet, dessen Höhe (h) der Dicke (*t1, t2*) von jedem der ersten und zweiten gekrümmten Schenkel (13a, 13b) entspricht, sodass die Unterseite (19b) des zweiten gekrümmten Schenkels (13b) und die Oberseite (19a') des ersten gekrümmten Schenkels (13a) im Wesentlichen in derselben Ebene liegen.

4. Laminierte Spule (10) gemäss irgendeinem der vorhergehenden Ansprüche, worin die angrenzenden Leiterpfade (14, 31) und die dazwischen liegenden Isolierstreifen (15, 31') des jeweiligen aktiven Teils (12) und der ersten und zweiten abgerundeten Endteile (30a, 30b) zusammen eine laminierte Spule bilden, worin die Laminierungen senkrecht zu den besagten ersten und zweiten Ebenen stehen.

5. Laminierte Spule gemäss irgendeinem der vorhergehenden Ansprüche, ferner umfassend einen oder zwei Kühlkörper (40), die sich von einem Endabschnitt eines abgerundeten Endteils oder von einem Endabschnitt der besagten ersten und zweiten abgerundeten Endteile (30a, 30b) aus erstrecken.

6. Spulenanordnung (100), umfassend N Spulen (C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃) gemäss irgendeinem der vorhergehenden Ansprüche, wobei N ein Vielfaches von 3 ist, worin der zweite gekrümmte Schenkel (13b) einer Spule (C1ₚₕ₁) auf dem ersten gekrümmten Schenkel (13a) zweier benachbarter Spulen (C2ₚₕ₂, C3ₚₕ₃) aufliegt, sodass die Querschnitte (s1C₂, s2C₁, s1C₃, s2C₂, s1C₄, s2C₃) der jeweiligen ersten und zweiten gekrümmten Schenkel (13a, 13b) der entsprechenden Spulen, genommen entlang einer mittleren Zone (16) des aktiven Teils (12) jeder Spule, ein versetztes Muster bilden.

7. Spulenanordnung (100) gemäss dem vorhergehenden Anspruch, umfassend eine einzige Reihe von Kühlkörpern (40), welche sich entlang einer Längsseite der Spulenanordnung erstreckt.

8. Spulenanordnung (100) gemäss Anspruch 6 oder 7, umfassend zwei Reihen von Kühlkörpern (40), welche sich entlang zweier gegenüberliegender Längsseiten der Spulenanordnung erstrecken.

9. Linearmotor, umfassend einen mit einem Permanentmagneten ausgestatteten festen Teil und einen beweglichen Teil, welcher die Spulenanordnung (100, 200) gemäss irgendeinem der Ansprüche 6 bis 8 umfasst.

## Revendications

1. Une bobine laminée (10) pour une machine électrique, avec les laminages disposés perpendiculairement au plan de la bobine, comprenant une partie active (12) comportant au moins une première et une seconde branche incurvée (13a, 13b ; 20a, 20b) formant entre elles une ouverture centrale (18) et au moins une première et une seconde partie terminale arrondie (30a, 30b) faisant corps avec les extrémités respectives desdites première et seconde branches incurvées (13a, 13b ; 20a, 20b), dans laquelle les rayons de courbure du bord latéral extérieur (18a, 18b) des première et seconde branches incurvées respectives (13a, 13b ; 20a, 20b) est supérieur aux rayons de courbure du bord extérieur (34a, 34b) des première et seconde parties terminales arrondies respectives (30a, 30b), et dans laquelle chacune desdites première et seconde parties terminales arrondies (30a, 30b) comprend une partie de transition (32a, 32b ; 32) de telle sorte que la surface inférieure (19a, 19b) des première et seconde branches incurvées respectives (13a, 13b ; 20a, 20b) se trouve respectivement dans un premier et un second plan parallèles l'un à l'autre, **caractérisé en ce que** le rapport entre la section (s2) de n'importe quel chemin conducteur adjacent (14) aux extrémités respectives des première et seconde branches incurvées (13a, 13b) et la section (s1) du chemin conducteur correspondant (14) au niveau d'une zone médiane (16) de la partie active (12) est supérieure à 80 % et de préférence supérieure à 90 %, dans laquelle la section (s1) de n'importe quel chemin conducteur adjacent (14) au niveau d'une zone médiane (16) de la partie active (12) correspond à la section (s3) du chemin conducteur correspondant (31) au niveau des première et seconde parties terminales arrondies respectives (30a, 30b).

2. La bobine laminée (10) selon la revendication 1, dans laquelle la partie active (12) comprend ni plus ni moins de deux branches incurvées (13a, 13b) faisant corps avec lesdites première et deuxième parties terminales arrondies (30a, 30b), et dans laquelle des chemins conducteurs incurvés adjacents (14), intercalés entre des bandes isolantes (15), s'étendent de manière continue le long desdites deux branches incurvées (13a, 13b) et desdites première et deuxième parties terminales arrondies (30a, 30b).

3. La bobine laminée (10) selon l'une quelconque des revendications précédentes, dans laquelle ladite partie de transition (32a, 32b) forme un rebord dont la hauteur (h) correspond à l'épaisseur (*t1, t2*) de chacune des première et seconde branches incurvées (13a, 13b) de telle sorte que la surface inférieure (19b) de la seconde branche incurvée (13b) et la surface supérieure (19a') de la première branche incurvée (13a) se trouvent sensiblement dans le même plan.

4. La bobine laminée (10) selon l'une quelconque des revendications précédentes, dans laquelle les chemins conducteurs adjacents (14, 31) et les bandes isolantes (15, 31') situées entre ceux-ci, respectivement de la partie active (12) et des première et seconde parties terminales arrondies (30a, 30b), forment ensemble une bobine laminée, les lamelles étant perpendiculaires auxdits premier et second plans.

5. La bobine laminée selon l'une quelconque des revendications précédentes, comprenant en outre un ou deux dissipateurs thermiques (40) s'étendant à partir d'une partie d'extrémité d'une partie terminale arrondie ou à partir d'une partie d'extrémité desdites première et seconde parties terminales arrondies (30a, 30b).

6. Ensemble de bobines (100) comprenant N bobines (C1ₚₕ₁, C2ₚₕ₂, C3ₚₕ₃, C4ₚₕ₁, C5ₚₕ₂, C6ₚₕ₃, C7ₚₕ₁, C8ₚₕ₂, C9ₚₕ₃, C10ₚₕ₁, C11ₚₕ₂ C12ₚₕ₃) selon l'une quelconque des revendications précédentes, N étant un multiple de 3, dans lequel la seconde branche incurvée (13b) d'une bobine (C1ₚₕ₁) repose sur la première branche incurvée (13a) de deux bobines adjacentes (C2ₚₕ₂, C3ₚₕ₃) de telle sorte que les sections transversales (s1C₂, s2C₁, s1C₃, s2C₂, s1C₄, s2C₃) des première et seconde branches incurvées (13a, 13b) respectives des bobines correspondantes, prises le long d'une zone médiane (16) de la partie active (12) de chaque bobine, forment un motif en quinconce.

7. L'ensemble de bobines (100) selon la revendication précédente, comprenant une seule rangée de dissipateurs thermiques (40) s'étendant le long d'un côté longitudinal de l'ensemble de bobines.

8. L'ensemble de bobines (100) selon la revendication 6 ou 7, comprenant deux rangées de dissipateurs thermiques (40) s'étendant le long de deux côtés longitudinaux opposés de l'ensemble de bobines.

9. Moteur linéaire comprenant une partie fixe dotée d'un aimant permanent et une partie mobile comprenant l'ensemble de bobines (100, 200) selon l'une quelconque des revendications 6 à 8.
